# EUROPEAN PATENT SPECIFICATION

(11) **EP 1 831 120 B1**
(45) Date of publication and mention of the grant of the patent: **19.08.2015**
(21) Application number: 05808395.7
(22) Date of filing: 23.11.2005
(51) Int. Cl.: C03C 8/10

(54) **ENAMEL COMPOSITION, ASSEMBLY AND USE THEREOF ON A SUBSTRATE SURFACE**
EMAILLEZUSAMMENSETZUNG, ANORDNUNG UND VERWENDUNG DAVON AUF EINER SUBSTRATOBERFLÄCHE
COMPOSITION D'EMAIL, ENSEMBLE ET UTILISATION DE CELLE-CI SUR UNE SURFACE DE SUBSTRAT

(30) Priority: 23.11.2004 NL 1027571; 11.02.2005 NL 1028258
(43) Date of publication of application: 12.09.2007
(73) Proprietor: Ferro Techniek Holding B.V., 7011 AT Gaanderen (NL)
(72) Inventor: KAASTRA, Simon, NL-7091 HV Dinxperlo (NL); MEINEN, Rudi, NL-7122 MG Aalten (NL)
(74) Representative: Brouwer, Hendrik Rogier
(86) International application number: PCT/NL2005/050050
(87) International publication number: WO 2006/083161

(56) References cited:
- EP-A- 0 387 670
- WO-A-98/35917
- DE-A1- 19 654 077
- FR-A- 2 345 530
- NL-A- 7 711 910
- US-A- 3 939 295
- US-A- 4 358 541
- US-A- 4 806 268
- DATABASE WPI Week 198730, Derwent Publications Ltd., London, GB; Class L01, AN 1987-210365 -& JP S62 137 897 A (ASAHI GLASS CO LTD) 20 June 1987

## Description

The invention relates to an enamel composition for application in an enamel layer in heating elements. The invention further comprises an assembly of such an enamel composition and a substrate surface. In addition, the invention comprises a heating element comprising such an assembly. The invention moreover comprises the use of such an enamel composition for applying an enamel layer to a substrate surface.

The use of an enamel layer as dielectric in the manufacture of, among other products, electrical heating elements is known, for instance from WO 00167818. Heat is generated by conducting electric current through an electrical resistance arranged on an enamel layer, for instance in order to heat liquids. The dielectric herein provides for electrical insulation of the electrical resistance which generally consists of a metal track. The manufacture of the dielectric from enamel herein results in a mechanically relatively strong dielectric which conducts heat relatively well. The composition of the enamel for application as dielectric is however critical in order to enable optimization of the electrical properties, particularly at temperatures occurring during use. The specific electrical resistance of the dielectric is generally high at room temperature, usually higher than 10¹² Ω cm, and falls sharply as temperatures increase in the order of magnitude of 10⁵ Ω cm at 400°C. At such a resistance a (relatively small) leakage current through the dielectric becomes possible. Detection of the leakage current through the enamel layer can provide relevant information in respect of the temperature of the heating element, and can be utilized in a circuit to prevent overheating of the heat element, as is known from WO 0167818.

Another property which determines the quality, and thereby the applicability, of the dielectric is the breakdown voltage. Breakdown voltage is the level of the electrical potential difference over the dielectric at which electric current flows through the dielectric. This can result in undesirable adverse effects, and even the irreparable disintegration of the enamel layer. In order to guarantee maximum safety in an electrical heating element, the breakdown voltage must therefore be high, preferably at least 1250 VAC (alternating current). There is a need for heating elements in which such a safety level can be realized in simple manner. The breakdown voltage of the dielectric is determined by multiple factors, including among others the layer thickness of the dielectric, the enamel composition and structural defects such as gas bubbles present in the dielectric A good adhesion of enamel to the substrate (generally steel or aluminium) is also important here.

There exists a need for enamel compositions with improved durability when used in heating elements.

The invention has for its object to provide such an enamel composition.

The invention provides for this purpose an enamel composition for application in an enamel layer in heating elements, comprising between 0 and 10% by mass of V₂O₅, between 0 and 10% by mass of PbO, between 5 and 13% by mass of B₂O₃, between 33 and 53% by mass of SiO₂, between 5 and 15% by mass of Al₂O₃, and between 20 and 30% by mass of CaO. Such a composition produces an enamel layer with an improved durability when used in heating elements. The enamel composition can be melted relatively easily, and herein has a favourable viscosity whereby it can be readily applied to different types of surface. The enamel composition adheres particularly well to metals, in particular steel and more particularly to ferritic chromium steel 1.4521. The maximum compressive stress of the enamel layer obtainable from the enamel composition lies for the new composition in the range 2.0-2.5 x 10⁸ Pa. For known enamel compositions the maximum compressive stress generally lies in the range 0.7-1.7 x 10⁸ Pa. The enamel composition according to the invention also has a better temperature resistance, so that prolonged exposure to temperatures up to 600°C, with peak loads of 750°C, presents no problem. The enamel composition is less susceptible to degeneration due to prolonged load at a high voltage than known enamel compositions. The rheological properties of the enamel composition are furthermore such that the enamel composition can be applied relatively simply to a substrate, wherein the chance of crack formation in the case of temperature changes is also reduced. Such an enamel composition is particularly suitable as dielectric in electrical heating elements. It is noted for the sake of clarity that the content of both PbO and V₂O₅ lies between 0 and 10% by mass, which thus implies that both PbO and V₂O₅ will be present in any embodiment variant of the enamel composition according to the invention so as to be able to impart the above stated advantageous properties to the enamel composition.

The mass of V₂O₅ and PbO is preferably a maximum of 12% by mass. This results in an enamel composition which can be processed relatively well as a paste, wherein an enamel layer is obtainable with a good adhesion to metal surfaces.

It is recommended that the quantity of V₂O₅ is a maximum of 2% by mass. A sufficiently adhesive enamel composition is thus obtained with favourable processing properties, wherein the use of vanadium, which has an environmental impact, is minimized. At higher concentrations of V₂O₅ there is found to be an increased chance of the occurrence of gas bubbles in an enamel layer formed from the enamel composition, particularly when used on a substrate layer in which manganese is present as trace element. Such gas bubbles are undesirable because they have an unfavourable effect on the mechanical and electrical properties of the enamel layer.

It is advantageous if the enamel composition is substantially free of lithium and sodium ions. Such an enamel composition is found to be particularly suitable for application as electrically insulating enamel layer with a high breakdown voltage. An enamel layer with such an enamel composition, in contrast to known enamel compositions, is moreover found to be able to withstand prolonged load with high voltages. This is particularly important when such an enamel composition is used as dielectric for a heating element, wherein an electrical resistance is attached to an enamel layer in order to generate heat. According to regulations of certifying organizations such as KEMA and ISO, it is desirable that the enamel composition for such applications can withstand voltages of 500-3000 V alternating current. When an electrical potential difference is applied over an enamel composition with such a composition, the leakage current through the enamel layer at increased temperatures (for instance greater than 300°C) is found to be relatively small compared to known enamel layers. This results in a relatively long lifespan of the enamel layer at increased temperatures, such as for instance in heating elements.

In a preferred embodiment the enamel composition comprises between 0.1 and 6% by weight of potassium. Through the addition of potassium the load-bearing capacity of the adhesion of the enamel composition to a substrate surface is less critical. In an assembly of such an enamel composition with a substrate surface less deformation occurs at increased temperatures, particularly in the case of overheating. This is particularly advantageous when the enamel composition is being burnt onto a heating element. The compressive stress is reduced but is still high enough to prevent undesired formation of hair cracks. At percentages of potassium higher than 6% by weight however, there is found to be a greater chance of formation of hair cracks. In combination with the absence of other alkali metal ions, in particular lithium and sodium, a low leakage current also remains guaranteed at increased temperatures. At increased temperature lithium and sodium have a certain mobility within the enamel layer which results in electrical conduction.

The invention also provides an assembly of a substrate surface and a layer of an enamel composition according to the invention applied to the substrate surface. An enamel layer supported by the substrate is thus obtained which can be used as dielectric.

The substrate surface is preferably manufactured substantially from metal. Metal can for instance be used as current-conducting and/or heat-conducting layer in combination with the dielectric layer according to the invention. The metal can for instance be steel or aluminium.

It is advantageous if the substrate surface is manufactured from a material with a coefficient of expansion which differs by between 20 and 45% from the coefficient of expansion of the enamel layer. A particular assembly is thus obtained which is found to be able to withstand temperature changes exceptionally well compared to known assemblies. Particularly the formation of hair cracks in the enamel layer has been found to be much less in the case of the enamel composition according to the invention. With a difference in coefficient of expansion of less than 20% the chance of hair cracks becomes too great. The coefficient of expansion can be adapted to the coefficient of expansion of the substrate by varying the enamel composition. The content of alkali metal ions (Li, Na, K) of the enamel composition can be increased in order to increase the coefficient of expansion. Increasing the potassium content is recommended here because the leakage current is hereby hardly affected at increased temperature. In addition to an increase in the coefficient of expansion, sodium and in particular lithium ions also result in an increased leakage current at high temperatures. Conversely, it is of course also possible to opt for a different substrate. The substrate surface is more preferably manufactured from a material with a coefficient of expansion which differs by a maximum of 35% from the coefficient of expansion of the enamel layer. A difference of between 20-35% in coefficient of expansion prevents the danger of deformation of the assembly as a result of overheating.

It is advantageous if the substrate surface substantially consists of ferritic chromium steel with a chromium content of at least 10% by mass. Such an assembly is found to be particularly impact-resistant compared to known assemblies, and is also particularly well able to withstand temperature changes.

In a preferred embodiment the enamel layer applied to the substrate surface is provided on the side remote from the substrate layer with a second enamel layer, wherein the second enamel layer has a relatively higher concentration of alkali metal ions than the enamel composition of the enamel layer applied to the substrate surface. It is particularly the concentration of lithium and/or sodium ions which is important for the concentration, and to a lesser extent the concentration of potassium ions since potassium ions contribute less toward leakage current through the dielectric. The leakage current through the layer between the sensor and an electrical resistance arranged on one of the layers is preferably measured prior to heating. In such an assembly the electrical conductivity of the layer with the higher concentration of alkali metal ions will be stronger and increase from a lower temperature than in the case of the layer with the lower concentration of conductive ions. Such an assembly is particularly useful in applications such as temperature-sensitive circuit in for instance a heating element.

In a particular preferred embodiment there can be arranged between the enamel layer applied to the substrate surface and the second enamel layer an electrical sensor for detecting leakage current through at least one of the layers, normally the layer having the highest electrical conduction at increased temperature. The sensor more preferably extends over the whole surface of the heating element, so that leakage current can be measured at all positions on the enamel layer. For this purpose the sensor can take the form of an electrically conductive network or grid. Apart from alkali metal ions, both layers are preferably manufactured from substantially the same enamel composition. Optimal adhesion between the layers is thus obtained. The difference in coefficient of expansion of the layers is moreover relatively small, so that the mechanical stresses in the material and adhesion are minimized, which results in an improved durability.

It is advantageous if the enamel layer applied to the substrate surface is substantially free of alkali metal ions. Particularly understood here by alkali metals are lithium and sodium. While potassium is also an alkali metal, it is found to have significantly less influence on the electrical resistance of the enamel composition. Such an enamel layer retains a relatively high electrical resistance at increased temperatures, which results in a relatively small leakage current when a potential difference is applied over the layer. The layer is moreover found to better able to withstand high voltages. This increases the accuracy of leakage current measurements through the second layer. Furthermore, a difference in resistance between the layers at increased temperature can be easily realized in such a manner.

The invention also provides a heating element comprising an assembly according to the invention. Due to the high temperature resistance of the enamel layer and the low leakage current the layer remains intact when the heating element fails as a result of overheating. In the case of such an overload a very large amount of heat is released and great electric currents can occur through the layers. In contrast to known enamel layers, the enamel layer according to the invention still provides after overload a good temperature resistance and good electrical insulation properties at higher temperatures. When such an enamel layer is used in for instance a heating element in a water boiler, this provides an improved safety for the user. In existing water boilers with known enamel layers much more expensive and technically more complicated measures have to be taken to achieve a comparable safety level. By making use of an enamel composition according to the invention an exceptionally safe heating element can thus be constructed in simple manner. Such a heating element can hereby also be supplied more cheaply.

The invention also provides the use of an enamel composition according to the invention for applying an enamel layer to a substrate surface. The enamel composition according to the invention can be applied in known manner to a substrate such as a metal surface.

The invention will now be elucidated on the basis of the following examples.

### Example 1

In this example two known enamel compositions A and B are compared with an enamel composition C according to the invention, wherein the components in percentages by mass are shown in table 1. Using this enamel composition an enamel layer can be prepared and applied to a substrate in accordance with known methods, such as described in for instance Petzold and Pöschmann, "Email und Emailliertechniek" (July 2003).

**Table 1**

| Component | A | B | C |
|---|---|---|---|
| Li₂O | 6 | 3 | - |
| K₂O | 6 | 7 | - |
| CaO | 13 | 11 | 28 |
| BaO | 6 | 4 | - |
| ZnO | 9 | 7 | 10 |
| Al₂O₃ | 1 | 1 | 10 |
| B₂O₃ | 15 | 16 | 8 |
| SiO₂ | 43 | 51 | 46 |
| TiO₂ | 2 | 3 | - |
| ZrO₂ | 1 | 1 | 6 |
| PbO | - | - | 6 |
| V₂O₅ | - | - | 2 |

The enamel composition is obtained by mixing the different raw materials using known rotating melting methods, wherein a glass frit results after cooling. This glass frit can be finely ground to a paste for further applications. The obtained paste can for instance be sprayed onto a substrate, such as a steel surface, wherein the enamel layer is formed on the substrate surface by heating.

Table 2 shows several important physical properties of enamel layers obtained with the above described enamel compositions. In this table the coefficient of expansion is ADK x 10⁻⁷/K,
Tg (°C) is the glass transition temperature of the enamel composition,
Te (°C) is the melting temperature of the enamel composition,
Compressive stress (x 10⁸ Pa): the compressive stress after cooling of a layer formed from the enamel composition on a substrate with a coefficient of expansion of 110 x 10⁻⁷/K, such as for instance ferritic chromium steel, and
Burn-out temperature (°C) is the burn-out temperature of the enamel layer.
R_{specific} (MΩ/m) is the specific electrical resistance of the enamel layer.

| Property | A | B | C |
|---|---|---|---|
| ADK x 10⁻⁷/K | 265 | 238 | 194 |
| T_{g} (°C) | 495 | 518 | 663 |
| Tₑ (°C) | 535 | 563 | 728 |
| Compressive stress (x 10⁸ Pa) | 0.69 | 1.16 | 2.33 |
| Burn-out temperature (°C) | 870 | 870 | 920 |
| R_{specific} (MΩ/m) | 0.03 | 0.37 | 320 |
| crack formation | + | + | - |

The coefficient of expansion is lower than in the known enamel compositions. A higher compressive stress is also measured in application on a substrate. The glass transition temperature and the melting temperature of enamel composition C are also higher than the known compositions, whereby the integrity and the temperature resistance of the enamel layer are improved. In addition, an enamel layer in accordance with composition C is found to result in less hair crack formation during use. A lower leakage current is also measured when the layer thickness and voltage are the same, which is explained by a higher electrical resistance and a higher breakdown voltage at increased temperatures. The above factors contribute toward an improved durability during operation under variable temperatures, as in a heating element.

### Example 2

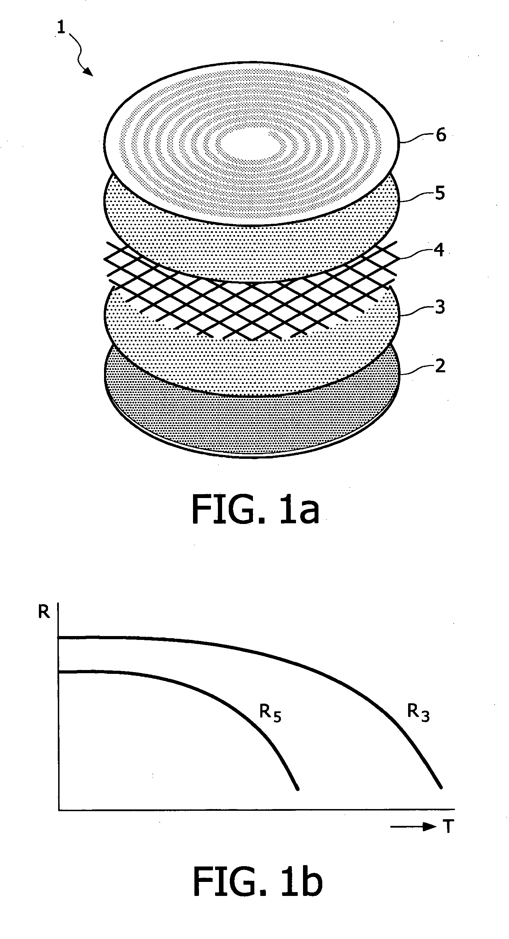

Figure 1a shows a heating element 1 according to the invention, wherein the different stacked layers 2, 3, 4, 5, 6 are shown separately of each other for the sake of clarity.

Heating element 1 comprises a metal substrate layer 2 manufactured from ferritic chromium steel with a content of 18% by mass of chromium. Arranged on substrate layer 2 is a first enamel layer 3 according to the invention, substantially the same as enamel composition C of the above example, with the difference that 3% by mass of potassium ions is added to layer 3 in the form of potassium oxide (K₂O). The enamel layer thereby has a high electrical resistance, also at high temperatures (for instance higher than 200°C), whereby a possible leakage current through the layer 3 is small. The added potassium ions have a stress-reducing effect on the compressive stress on enamel layer 3, and increases the coefficient of expansion of the enamel, whereby less high demands are made of the adhesion to the substrate. The compression strength does however remain high enough to counter the formation of hair cracks. Arranged on the electrically insulating enamel layer 3 is an electrically conductive grid 4 manufactured from ruthenium oxide (RuO₂) to which is then applied a second enamel layer 5 according to the invention. The enamel composition of the second enamel layer is substantially the same as the first enamel layer 3, with the difference that the second enamel layer 5 has an electrical resistance which decreases at a lower temperature than the electrical resistance of insulating layer 3. This effect is achieved by adding lithium or sodium ions instead of potassium ions to the enamel composition of the second layer 5, for instance in the form of the relevant alkali metal oxides Li₂O or Na₂O. Subsequently arranged on the second layer 5, which has a relatively better conduction, is an electrical resistance which can be used to generate heat. In order to monitor the temperature of heating element 1 during use, sensor layer 4 provides the option of determining the leakage current through the relatively conductive layer 5 and/or the relatively insulating layer 3. The magnitude of the leakage current is indicative of the magnitude of the highest temperature at a position on the element. Electrical circuits which can be used for this purpose are described for instance in WO 0167818. The advantage of the use of enamel compositions according to the invention in such leakage current overheating safety devices is that a heat element can be obtained with improved durability. Because substantially the same composition is used for both enamel compositions 3, 5, an exceptionally good adhesion is obtained between the two enamel layers 3, 5, wherein the sensor grid 4 makes good contact with the layers to enable optimum recording of the leakage current.

The temperature-dependent progression of the electrical resistances R of the relatively conductive layer 5 (R₅) and the relatively insulating layer 3 (R₃) are shown in figure 1b. It can be seen that, as temperature T increases, the resistance of the relatively conductive layer 5 (R₅) decreases more rapidly and at a lower temperature than the resistance (R₃) of the relatively insulating layer 3. The breakdown-voltage of the relatively insulating layer 3 is thus significantly higher at increased temperatures than the breakdown voltage of the relatively conductive layer 5. By modifying the composition of the enamel compositions to the desired minimum and maximum heating temperature, a temperature safety device for heating element 1 can be realized using a relatively simple electrical circuit.

It will be apparent that for a skilled person in the field many applications and variations of the enamel composition according to the invention can still be envisaged.

## Claims

1. Enamel composition for application in an enamel layer (3) in heating elements, comprising between 0 and 10% by mass of V₂O₅, between 0 and 10% by mass of PbO, between 5 and 13% by mass of B₂O₃, between 33 and 53% by mass of SiO₂, between 5 and 15% by mass of Al₂O₃, and between 20 and 30% by mass of CaO.

2. Enamel composition as claimed in claim 1, **characterized in that** the mass of V₂O₅ and PbO is a maximum of 12% by mass.

3. Enamel composition as claimed in claim 1 or 2, **characterized in that** the quantity of V₂O₅ is a maximum of 2% by mass.

4. Enamel composition as claimed in any of the foregoing claims, **characterized in that** the enamel composition is substantially free of lithium and sodium ions.

5. Enamel composition as claimed in any of the foregoing claims, **characterized in that** the enamel composition comprises between 0.1 and 6% by weight of potassium.

6. Assembly of a substrate surface and an enamel layer (3) of an enamel composition as claimed in any of the foregoing claims applied to the substrate surface.

7. Assembly as claimed in claim 6, **characterized in that** the substrate surface is manufactured substantially from metal.

8. Assembly as claimed in any of the claims 6 or 7, **characterized in that** the substrate surface substantially consists of ferritic chromium steel with a chromium content of at least 10% by mass.

9. Assembly as claimed in any of the claims 6-8, **characterized in that** the enamel layer (3) applied to the substrate surface is provided with a second enamel layer (5) on the side of the enamel layer remote from the substrate surface layer, wherein the second enamel layer (5) has a relatively higher concentration of lithium or sodium ions than the enamel composition of the enamel layer (3) applied to the substrate surface.

10. Assembly as claimed in claim 9, **characterized in that** the enamel layer (3) applied to the substrate surface is substantially free of alkali metal ions.

11. Heating element comprising an assembly as claimed in any of the claims 6-10.

12. Use of an enamel composition as claimed in any of the claims 1-5 for applying an enamel layer (3) to a substrate surface of a heating element.

## Patentansprüche

1. Emaillezusammensetzung zur Anwendung in einer Emailleschicht (3) in Heizelementen, umfassend zwischen 0 und 10 Massen-% V₂O₅, zwischen 0 und 10 Massen-% PbO, zwischen 5 und 13 Massen-% B₂O₃, zwischen 33 und 53 Massen-% SiO₂, zwischen 5 und 15 Massen-% Al₂O₃ und zwischen 20 und 30 Massen-% CaO.

2. Emaillezusammensetzung nach Anspruch 1, **dadurch gekennzeichnet, dass** die Masse von V₂O₅ und PbO maximal 12 Massen-% beträgt.

3. Emaillezusammensetzung nach Anspruch 1 oder 2, **dadurch gekennzeichnet, dass** die Menge von V₂O₅ maximal 2 Massen-% beträgt.

4. Emaillezusammensetzung nach einem der vorhergehenden Ansprüche,
**dadurch gekennzeichnet, dass** die Emaillezusammensetzung weitgehend frei von Lithium- und Natriumionen ist.

5. Emaillezusammensetzung nach einem der vorhergehenden Ansprüche,
**dadurch gekennzeichnet, dass** die Emaillezusammensetzung zwischen 0,1 und 6 Gew.-% Kalium umfasst.

6. Anordnung aus einer Substratoberfläche und einer Emailleschicht (3) aus einer Emaillezusammensetzung nach einem der vorhergehenden Ansprüche, die auf die Substratoberfläche aufgebracht ist.

7. Anordnung nach Anspruch 6, **dadurch gekennzeichnet, dass** die Substratoberfläche weitgehend aus Metall gefertigt ist.

8. Anordnung nach einem der Ansprüche 6 oder 7, **dadurch gekennzeichnet, dass** die Substratoberfläche weitgehend aus ferritischem Chromstahl mit einem Chromgehalt von mindestens 10 Massen-% besteht.

9. Anordnung nach einem der Ansprüche 6-8, **dadurch gekennzeichnet, dass** die auf die Substratoberfläche aufgebrachte Emailleschicht (3) auf der substratoberflächenschichtfernen Seite mit einer zweiten Emailleschicht (5) versehen ist, wobei die zweite Emailleschicht (5) eine relativ höhere Konzentration von Lithium- oder Natriumionen aufweist als die Emaillezusammensetzung der auf die Substratoberfläche aufgebrachten Emailleschicht (3).

10. Anordnung nach Anspruch 9, **dadurch gekennzeichnet, dass** die auf die Substratoberfläche aufgebrachte Emailleschicht (3) weitgehend frei von Alkalimetallionen ist.

11. Heizelement, umfassend eine Anordnung nach einem der Ansprüche 6-10.

12. Verwendung einer Emaillezusammensetzung nach einem der Ansprüche 1 bis 5 zum Aufbringen einer Emailleschicht (3) auf eine Substratoberfläche eines Heizelements.

## Revendications

1. Composition d'émail pour application dans une couche d'émail (3) dans des éléments chauffants, comprenant entre 0 et 10 % en masse de V₂O₅, entre 0 et 10 % en masse de PbO, entre 5 et 13 % en masse de B₂O₃, entre 33 et 53 % en masse de SiO₂, entre 5 et 15 % en masse d'Al₂O₃, et entre 20 et 30 % en masse de CaO.

2. Composition d'émail selon la revendication 1, **caractérisée en ce que** la masse de V₂O₅ et PbO représente un maximum de 12 % en masse.

3. Composition d'émail selon la revendication 1 ou 2, **caractérisée en ce que** la quantité de V₂O₅ représente un maximum de 2 % en masse.

4. Composition d'émail selon l'une quelconque des revendications précédentes, **caractérisée en ce que** la composition d'émail est sensiblement dépourvue d'ions lithium et sodium.

5. Composition d'émail selon l'une quelconque des revendications précédentes, **caractérisée en ce que** la composition d'émail comprend entre 0,1 et 6 % en poids de potassium.

6. Ensemble d'une surface de substrat et d'une couche d'émail (3) d'une composition d'émail selon l'une quelconque des revendications précédentes appliquée à la surface de substrat.

7. Ensemble selon la revendication 6, **caractérisé en ce que** la surface de substrat est fabriquée essentiellement à partir de métal.

8. Ensemble selon l'une quelconque des revendications 6 et 7, **caractérisé en ce que** la surface de substrat consiste essentiellement en un acier au chrome ferritique avec une teneur en chrome d'au moins 10 % en masse.

9. Ensemble selon l'une quelconque des revendications 6 à 8, **caractérisé en ce que** la couche d'émail (3) appliquée à la surface de substrat est pourvue d'une deuxième couche d'émail (5) sur le côté de la couche d'émail distant de la couche de surface de substrat, la deuxième couche d'émail (5) ayant une concentration d'ions lithium ou sodium relativement supérieure à celle de la composition d'émail de la couche d'émail (3) appliquée à la surface de substrat.

10. Ensemble selon la revendication 9, **caractérisé en ce que** la couche d'émail (3) appliquée à la surface de substrat est sensiblement dépourvue d'ions de métaux alcalins.

11. Élément chauffant comprenant un ensemble selon l'une quelconque des revendications 6 à 10.

12. Utilisation d'une composition d'émail selon l'une quelconque des revendications 1 à 5 pour l'application d'une couche d'émail (3) a une surface de substrat d'un élément chauffant.
